# EUROPÄISCHE PATENTANMELDUNG

(11) **EP 4 604 388 A1**
(43) Veröffentlichungstag der Anmeldung: **20.08.2025**
(21) Anmeldenummer: 24215111.6
(22) Anmeldetag: 25.11.2024
(51) Int. Cl.: H02S 20/23, F24S 25/65, H02G 13/00, H02S 30/00, H02S 40/30

(54) **BLITZFANGSTAB, AUFLAGEPROFIL UND PHOTOVOLTAIK-ANORDNUNG**

(30) Priorität: 14.02.2024 DE 102024104052
(71) Anmelder: DEHN SE, 92318 Neumarkt i.d. OPf. (DE); ABS Safety GmbH, 47623 Kevelaer (DE)
(72) Erfinder: Simbeck, Maximilian, 92318 Neumarkt i.d.OPf (DE); Stock, Rainer, 92318 Neumarkt i.d.OPf (DE); Dürr, Dietmar, 92318 Neumarkt i.d.OPf (DE); Seger, Siegfried, 92318 Neumarkt i.d.OPf (DE); Hirschmann, Helmut, 92318 Neumarkt i.d.OPf (DE); Rankers, Simon, 47623 Kevelaer (DE); Joereßen, Philipp, 47623 Kevelaer (DE)
(74) Vertreter: Isarpatent

(57) **Zusammenfassung**

Die Erfindung schafft einen Blitzfangstab, insbesondere zur Verwendung in einem Auflageprofil für Photovoltaik-Paneele, ein entsprechendes Auflageprofil und eine entsprechende Photovoltaik-Anordnung. Der Blitzfangstab (6) umfasst einen Metallstab (61) und eine optionale Hülse (62), die am unteren Ende des Metallstabs (61) angeordnet ist. Die Hülse oder der Metallstab ist über eine Gewindestange und eine Mutter oder über eine Gewindebohrung und eine Schraube in einer mittleren Nut des Auflageprofil verschraubbar. Das Auflageprofil (1) umfasst einen Hauptkörper (3) mit einer Unterseite zum Aufstellen auf oder in einer Befestigungsschiene (7) und einer Oberseite zum Stützen und Befestigen der PV-Paneele (2), wobei an der Oberseite zwei äußere Nuten (4) zum Befestigen der jeweiligen PV-Paneele (2) und eine mittlere Nut (5) zum Befestigen des Blitzfangstabs (6).

## Beschreibung

### GEBIET DER ERFINDUNG

Die vorliegende Erfindung betrifft einen Blitzfangstab, insbesondere zur Verwendung in einem Auflageprofil für Photovoltaik-Paneele, ein entsprechendes Auflageprofil und eine entsprechende Photovoltaik-Anordnung.

### ALLGEMEINER STAND DER TECHNIK

Zum Montieren von Photovoltaik ("PV") -Systemen auf Dächern wird üblicherweise eine Unterkonstruktion verwendet, an der einzelne PV-Module bzw. PV-Paneele befestigt werden können. Die insbesondere aus einem Metall oder einer Metalllegierung gefertigten Bauteile der Unterkonstruktion werden meist mit einer Blitzschutzanlage bzw. Blitzschutzeinrichtung verbunden, um die PV-Module vor Blitzeinschlag zu schützen.

Aus dem Gebrauchsmuster DE 295 16 463 U1 ist beispielsweise eine Unterkonstruktion zum Anbringen von Dachzubehörteilen und Dachaufbauten auf geneigten Dächern bekannt, an der z.B. Solarzellen und ein Befestigungselement für eine Blitzschutzanlage montiert werden können.

Das Gebrauchsmuster DE 202 19 173 U1 offenbart ein Montagesystem zum Montieren von Photovoltaikmodulen, das Profilschienen aus Aluminium-Silizium-Legierung umfasst, an denen mittels Nuten und Schrauben Photovoltaikmodule montiert werden können. Über einen angeschlossenen Kabelschuh kann ein Potentialausgleich mit einem Blitzschutz erreicht werden.

Das chinesische Gebrauchsmuster CN 219 611 648 U beschreibt eine Unterkonstruktion zum Montieren von PV-Paneelen, die netzförmig ausgebildet ist und an Kreuzungspunkten der Träger senkrecht angeordnete Blitzfangstäbe aufweist. Zum Montieren der PV-Paneele werden an den Ecken Montageblöcke verwendet.

Das chinesische Gebrauchsmuster CN 217 643 287 U offenbart eine Blitzschutzeinrichtung für PV-Paneele, die an einer Stützkonstruktion befestigt werden. An einem Träger werden die PV-Paneele montiert. Am Träger sind zudem Befestigungen für Blitzfangstäbe angeordnet, die mit einem Blitzschutzdraht verbunden sind.

### KURZDARSTELLUNG DER ERFINDUNG

Ausgehend vom Stand der Technik ist es eine Aufgabe der vorliegenden Erfindung, das zum Montieren von Photovoltaik, PV, -Paneelen auf einer Aufständerung mit integriertem Blitzschutz zu ermöglichen. Hierzu werden ein Blitzfangstab nach Anspruch 1 bzw. 2 bzw. 4, ein Auflageprofil nach Anspruch 6 und eine Photovoltaik-Anordnung nach Anspruch 12 bereitgestellt. Durch die Auflageprofile lassen sich die PV-Module besonders einfach und vielseitig montieren, wobei ein Blitzschutz auf einfache Weise integriert werden kann.

Ein erfindungsgemäßer Blitzfangstab wird insbesondere zur Verwendung in einem Auflageprofil für PV-Paneele bereitgestellt. Der Blitzfangstab umfasst einen Metallstab, der sich von einer Spitze an einem ersten Ende entlang einer Längsachse bis zu einem zweiten Ende erstreckt. Der Metallstab ist vorzugsweise aus einem Metall bzw. einer Metalllegierung mit hoher elektrischer Leitfähigkeit und Korrosionsbeständigkeit hergestellt. Die Länge des Metallstabs kann ca. 20 cm bis ca. 100 cm, beispielsweise ca. 30 cm betragen, so dass die Spitze ausreichend hoch über eine PV-Anordnung hinausragen kann, um eine geeignete Fangwirkung auf Blitze zu erzielen.

Am zweiten Ende des Metallstabs ist eine Hülse angeordnet, die einen Endabschnitt des Metallstabs umgibt und fest mit dem Metallstab verbunden ist, beispielsweise durch Verpressen, Verschweißen, Verschrauben oder Verlöten. Die Hülse ermöglicht ein besonders einfaches Befestigen des Blitzfangstabs am Auflageprofil.

Entlang der Längsachse ist am zweiten Ende des Metallstabs eine Gewindestange zum Verschrauben des Blitzfangstabs mit einer Mutter am Auflageprofil angeordnet. Die Gewindestange kann als Fortsetzung des Metallstabs ausgebildet sein. Mit anderen Worten, am zweiten Ende des Metallstabs kann ein Außengewinde ausgebildet sein, wobei das Ende des Metallstabs mit dem Außengewinde am zweiten Ende aus der Hülse geführt ist und herausragt. Gemäß einer alternativen Ausführung kann die Gewindestange an der Hülse befestigt bzw. ausgebildet sein, so dass das Gewinde als Teil der Hülse ausbildet ist.

Die Hülse weist auf der Seite des Gewindes eine ringförmige Endfläche auf, die als Auflage auf einer Oberseite des Auflageprofils dient. Die Endfläche ist senkrecht zur Längsachse angeordnet und umgibt das Gewinde. Wenn der Blitzfangstab mit der Auflagefläche auf der Oberseite des Auflageprofils aufliegt, ragt das Gewinde in eine im Auflageprofil ausgebildete Nut hinein. In der Nut kann eine Mutter passgenau angeordnet sein, so dass sich das Gewinde einfach in die Mutter einschrauben lässt, während die Mutter von der Nut gehalten wird.

Alternativ umfasst der Blitzfangstab einem Metallstab der am zweiten Ende in einer Hülse verpresst wird. Die Hülse wiederum weist auf der gegenüberliegenden Seite eine Gewindebohrung auf. Mithilfe einer Schraube, deren Schraubenkopf der Schlüsselweite der mittleren Nut entspricht, wird der Metallstab mit Hülse am Auflageprofil befestigt.

Gemäß einer bevorzugten Ausführung weist die Hülse an ihrer Oberfläche eine Vielzahl von gegenüberliegenden Abflachungen als Schnittstelle für einen Schraubenschlüssel auf. Beispielsweise kann die Hülse an den Abflachungen im Querschnitt senkrecht zur Längsachse eine sechseckige oder achteckige Form aufweisen. Somit kann der Blitzfangstab besonders einfach mit einem herkömmlichen Maulschlüssel am Auflageprofil festgeschraubt werden.

Ein erfindungsgemäßes Auflageprofil dient zum Stützen und Befestigen von Photovoltaik-Paneelen auf einer Aufständerung bzw. auf einem Dach oder dergleichen. Das Auflageprofil umfasst einen Hauptkörper mit einer Unterseite zum Aufstellen auf oder in einer Befestigungsschiene und einer Oberseite zum Stützen und Befestigen der PV-Paneele. An der Oberseite sind zwei äußere Nuten zum Befestigen der PV-Paneele und eine mittlere Nut zum Befestigen eines Blitzfangstabs ausgebildet. Die Nuten können vorzugsweise so ausgebildet sein, dass eine handelsübliche Sechskantmutter bzw. ein Sechskantschraubenkopf o.ä. passgenau von der Seite in die Nut eingeschoben werden kann und beim Verschrauben von der Nut gehalten wird. Die Mutter kann entlang der Länge der Nut verschoben werden, wodurch eine Flexibilität der Position der Verschraubung mit den PV-Paneelen ermöglicht wird.

Gemäß einer bevorzugten Ausgestaltung ist der Hauptkörper ein extrudiertes Metallprofil aus einem Metall oder einer Metalllegierung mit hoher elektrischer Leitfähigkeit. Das Metallprofil kann somit selbst als elektrischer Leiter zum elektrischen Verbinden des Blitzfangstabs und weiteren Leitern einer Blitzschutzeinrichtung dienen. Somit sind vorzugsweise keine zusätzlichen Verdrahtungen zum Verbinden des Blitzfangstabs mit der Blitzschutzeinrichtung nötig. Ein extrudiertes Profil lässt sich besonders einfach und kostengünstig in großer Stückzahl fertigen.

Der Hauptkörper weist im Querschnitt vorzugsweise eine taillierte Form auf. Eine solche Form kann die Festigkeit erhöhen und somit die Last der PV-Paneele sowie einer möglichen Schneelast oder dergleichen tragen, ohne dass der Hauptkörper nachhaltig verformt oder beschädigt wird.

Die Oberseite des Hauptkörpers ist vorzugsweise abgerundet, um eine schräge Auflagefläche für die PV-Paneele bereitzustellen. Somit können die PV-Paneele vorzugsweise schräg montiert werden, um eine günstige Ausrichtung zur Sonne zu erzielen sowie ein Ablaufen von Regenwasser zu ermöglichen.

Der Hauptkörper weist in der Nähe der Unterseite vorzugsweise eine Vielzahl von Schraubenlöchern zum Befestigen des Hauptkörpers mit einer Befestigungsschiene auf. Die Schraubenlöcher können einfach beim Extrudieren des Profils ausgebildet werden. Durch das Verschrauben des Hauptkörpers mit zwei Befestigungsschienen kann der Hauptkörper zudem als Verbindungsstück für zwei Befestigungsschienen dienen, wobei gleichzeitig eine elektrisch leitfähige Verbindung zwischen den Befestigungsschienen hergestellt wird.

Die Befestigungsschienen sowie der Hauptkörper sind vorzugsweise aus Aluminium gefertigt. Aluminium bietet einen guten Kompromiss zwischen geringem Gewicht, hoher Festigkeit und hoher elektrischer Leitfähigkeit und Korrosionsbeständigkeit.

Gemäß einer weiteren Ausführung kann das Auflageprofil eine Potenzialklemme zum elektrischen Verbinden des Auflageprofils mit einer Verdrahtung der Blitzschutzeinrichtung aufweisen. Eine solche Potenzialklemme kann insbesondere dann verwendet werden, wenn die elektrische Verbindung zwischen Blitzfangstab nicht oder nicht ausschließlich über den Hauptkörper erfolgen soll oder kann, beispielsweise wenn der Hauptkörper aus einem nicht leitfähigem Material besteht.

Eine erfindungsgemäße PV-Anordnung umfasst eine Vielzahl parallel angeordneter Befestigungsschienen, eine Vielzahl von Auflageprofilen, die auf den Befestigungsschienen angeordnet sind, eine Vielzahl von PV-Paneelen, die jeweils an einer Seite auf mindestens zwei Auflageprofilen aufliegen, eine Vielzahl von Blitzfangstäben, die jeweils in einem Auflageprofil angeordnet sind, und eine Verdrahtung zum elektrischen Verbinden der Befestigungsschienen untereinander.

Die Verdrahtung und die Befestigungsschienen bilden beispielsweise Maschen mit einem Raster von ungefähr 5 m mal 5 m bzw. 5,1 m mal 5,1 m. Denkbar sind jedoch je nach Anwendung Maschenweiten die auch kleiner oder größer.

In einer bevorzugten Ausführung kann die Verdrahtung mit einer Bewehrung bzw. Armierung in einer Betonkonstruktion eines Gebäudes oder dergleichen verbunden sein. Im Allgemeinen ist die Verdrahtung mit einer bestehenden Blitzschutzeinrichtung verbunden und geerdet.

Eine bevorzugte PV-Anordnung kann eine Absturzsicherung aufweisen, die mit den Befestigungsschienen verbunden sein kann. Die Absturzsicherung weist zwischen Sicherungspunkten verspannte Drahtseile auf, mit denen sich ein Benutzer mittels einer geeigneten persönlichen Schutzausrüstung (PSA) verbinden kann, um einen Sturz von großer Höhe zu verhindern. Ferner kann die PV-Anordnung ein Geländer aufweisen, das mit den Befestigungsschienen verbunden ist. Sowohl die Absturzsicherung als auch das Geländer können elektrisch leitend mit der Blitzschutzeinrichtung verbunden sein.

Das Geländer kann vorzugsweise ein festes Geländer und/oder ein verschiebbares Geländer umfassen. Durch ein verschiebbares Geländer kann mit geringem Materialaufwand eine möglichst vielseitige Absicherung bereitgestellt werden.

### KURZBESCHREIBUNG DER ZEICHNUNGEN

Die Erfindung wird ausführlicher mit Verweis auf beispielhafte Ausführungsformen beschrieben, die in den beiliegenden Zeichnungen dargestellt sind.

Die beiliegenden Zeichnungen sind enthalten, um ein weiteres Verständnis dieser Erfindung zu ermöglichen und sind in diese Beschreibung einbezogen und stellen einen Teil davon dar. Die Zeichnungen illustrieren die Ausführungsformen dieser Erfindung und dienen gemeinsam mit der Beschreibung der Erklärung der Grundsätze der Erfindung. Andere Ausführungsformen dieser Erfindung und viele der vorgesehenen Vorteile dieser Erfindung sind leicht zu verstehen, wenn sie durch Verweis auf die folgende ausführliche Beschreibung besser verständlich werden. Die Elemente der Zeichnungen sind nicht notwendigerweise im gleichen Maßstab zueinander gezeichnet. Gleiche Bezugszeichen bezeichnen entsprechend ähnliche Teile.
- Fig. 1: zeigt eine schematische Ausschnittsansicht einer Photovoltaik-Anordnung
- Fig. 2: gemäß einer Ausführungsform der vorliegenden Erfindung; zeigt eine schematische Ansicht eines Blitzfangstabs gemäß einer weiteren Ausführungsform der vorliegenden Erfindung;
- Fig. 3: zeigt eine schematische Ansicht einer alternativen Ausführungsform eines Auflageprofils;
- Fig. 4: zeigt eine schematische Ansicht einer weiteren alternativen Ausführungsform eines Auflageprofils;
- Fig. 5: zeigt eine Anordnung von Befestigungsschienen mit Auflageprofilen;
- Fig. 6: zeigt eine Ansicht einer Photovoltaik-Anordnung mit einem Geländer und einer Absturzsicherung;
- Fig. 7: zeigt eine vergrößerte Ansicht auf ein Auflageprofil der Photovoltaik-Anordnung aus Fig. 6;
- Fig. 8a),b): zeigen eine vergrößerte Ansicht auf die Absturzsicherung der Photovoltaik-Anordnung aus Fig. 6;
- Fig. 9a)-c): illustrieren ein Raster der Blitzfangstäbe in einer Photovoltaik-Anordnung; und

Fig. 10a),b) illustrieren alternative Ausführungsformen des Blitzfangstabes.

In den Figuren bezeichnen gleiche Bezugszeichen gleiche oder funktional ähnliche Bauteile, wenn nicht anders angegeben. Alle Richtungsbezeichnungen, wie "oben", "unten", "links", "rechts", "über", "unter", "horizontal", "vertikal", "hinten", "vorne" und ähnliche Begriffe werden nur zur Erklärungszwecken verwendet und sollen die Ausführungsformen nicht auf die spezifischen Anordnungen beschränken, die in den Zeichnungen dargestellt sind.

### AUSFÜHRLICHE BESCHREIBUNG DER ERFINDUNG

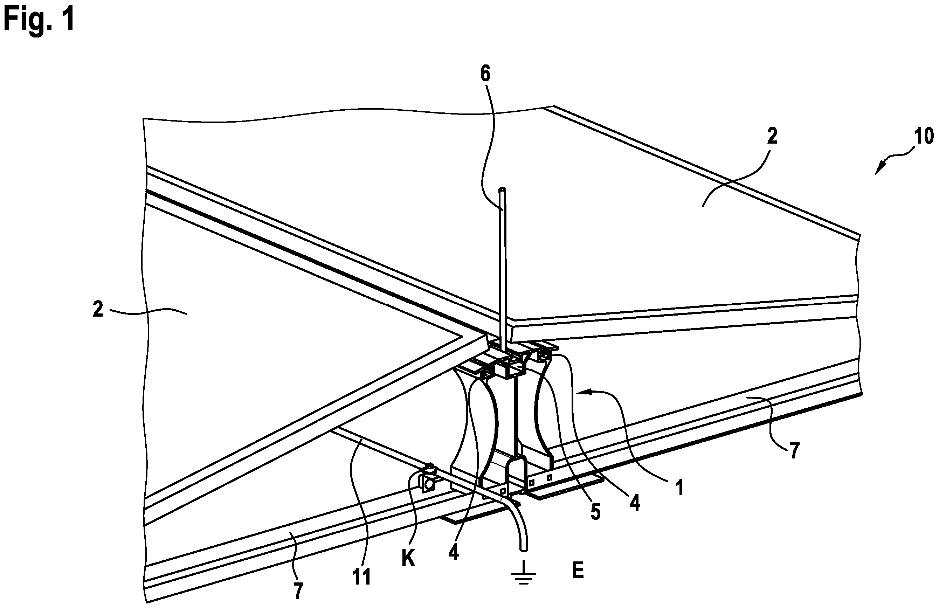

Fig. 1 zeigt eine schematische Ausschnittsansicht einer Photovoltaik-Anordnung gemäß einer Ausführungsform der vorliegenden Erfindung.

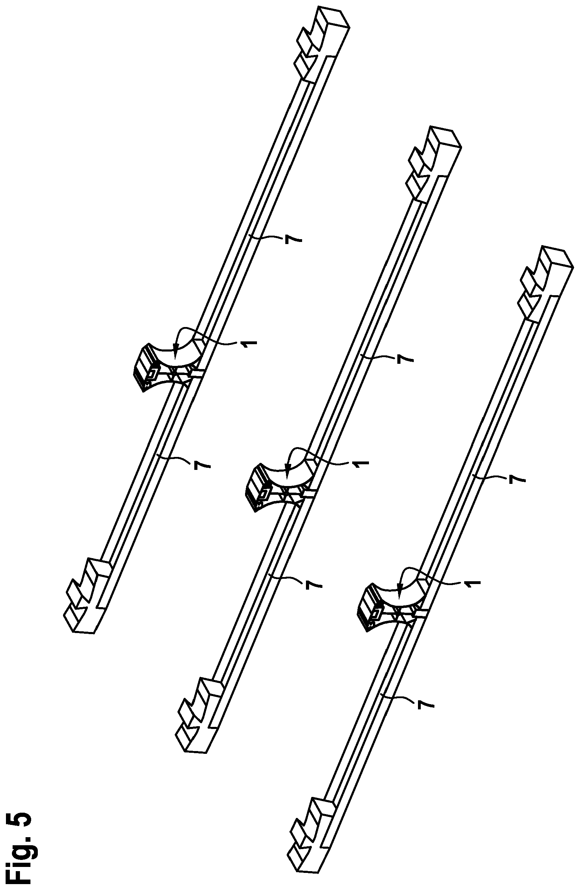

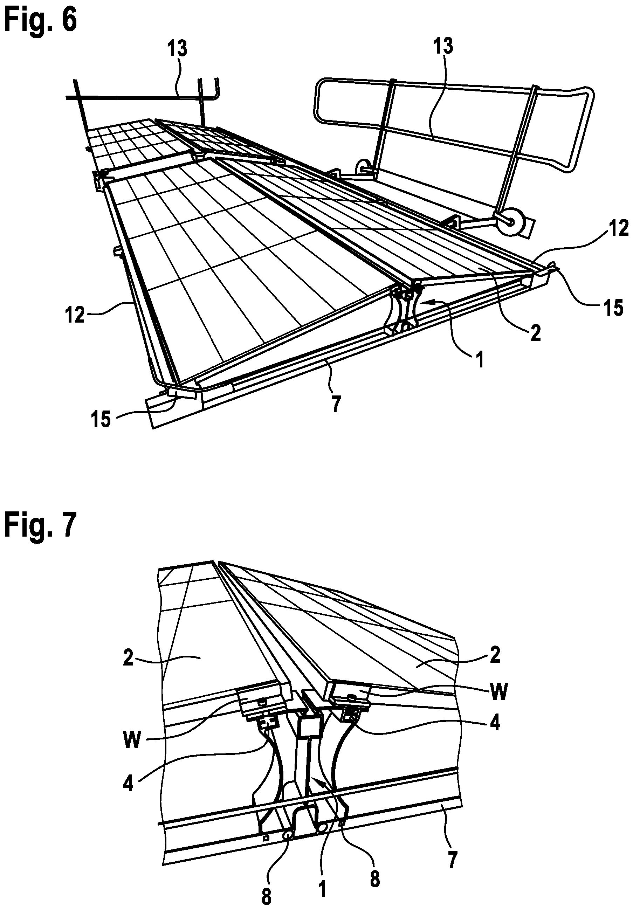

Die schematische perspektivische Ausschnittsansicht der PV-Anordnung 10 zeigt zwei metallisch leitende Befestigungsschienen 7, auf denen ein Auflageprofil 1 derart befestigt ist, dass es die beiden Befestigungsschienen 7 mechanisch und elektrisch verbindet. Das Auflageprofil 1 dient als Stütze für zwei PV-Paneele 2, die jeweils mit einer Ecke auf einer Oberseite des Auflageprofil 1 aufliegen. Die Befestigung der PV-Paneele 2 am Auflageprofil 1 wird später anhand von Fig. 7 näher beschrieben. Eine Verdrahtung 11 verbindet die gezeigten Befestigungsschienen 7 mit weiteren parallel verlaufenden Befestigungsschienen (vgl. Fig. 5), um eine geeignete Vermaschung zur Blitzableitung zu bilden. Die Verdrahtung 11 ist mit einer vorhandenen Blitzschutzerdung bzw. einer Bewehrung verbunden. Vorzugsweise kann alle 5 m eine parallele Verdrahtung 11 angeordnet sein.

Die Verdrahtung 11 kann vielseitig über entsprechende Klemmen K mit den Befestigungsschienen 7 verbunden werden. Als Draht für die Verdrahtung 11 kann beispielsweise ein Aluminiumdraht mit einem Durchmesser von 8 mm verwendet werden.

Obwohl beim vorliegenden Beispiel zwei metallisch leitende Befestigungsschienen 7 durch das Auflageprofil 1 verbunden werden, kann auch eine durchlaufende Befestigungsschiene vorhanden sein.

An einer mittleren Nut 5 des Auflageprofils 1 ist ein Blitzfangstab 6 angeordnet und darin verklemmt, z.B. durch eine Schraubverbindung, wie weiter unten erläutert. Der Blitzfangstab 6 ragt bei diesem Beispiel ca. 30 cm nach oben, um die PV-Paneele 2 vor Blitzschlag zu schützen. Der Blitzfangstab 6 ist somit über das Auflageprofil 1 mechanisch und elektrisch mit den Befestigungsschienen 7 verbunden.

An äußeren Nuten 4 des Auflageprofils 1 schließlich werden die PV-Paneele 2 befestigt, wie weiter unter erläutert wird.

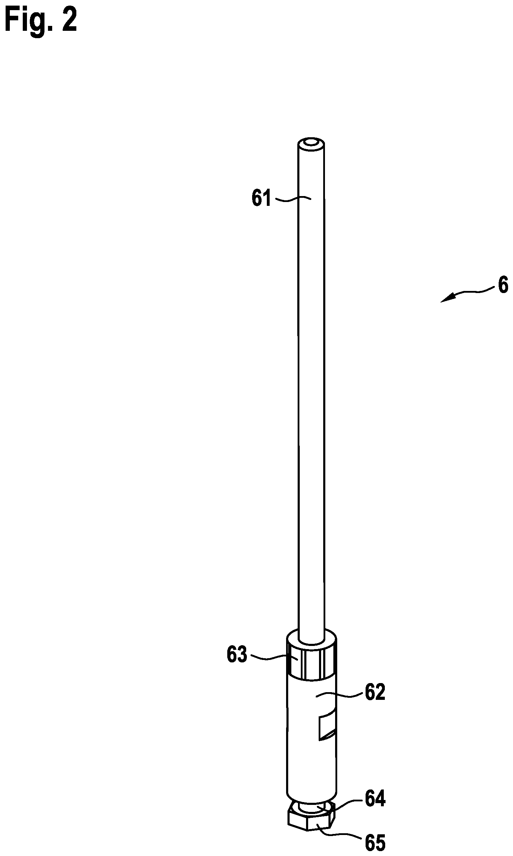

Fig. 2 zeigt eine schematische Ansicht eines Blitzfangstabs gemäß einer weiteren Ausführungsform der vorliegenden Erfindung.

Der mehrteilige Blitzfangstabs 6 ist hier zweiteilig aufgebaut und umfasst einen oberen Metallstab 61, der sich von einer Spitze an einem ersten Ende entlang einer Längsachse bis zu einem zweiten Ende erstreckt. Der Metallstab 61 ist aus einem Metall bzw. einer Metalllegierung mit hoher elektrischer Leitfähigkeit und Korrosionsbeständigkeit gefertigt. Die Länge des Metallstabs 61 kann z.B. ca. 20 cm bis ca. 40 cm, vorzugsweise ca. 30 cm betragen, um eine ausreichende Fangwirkung für Blitze zu erzielen, so dass darunter angeordnete PV-Paneele vor direktem Blitzeinschlag geschützt werden können.

Am zweiten Ende des Metallstabs 61 ist eine Hülse 62 angeordnet, die einen Endabschnitt des Metallstabs 61 umgibt und fest mit dem Metallstab 61 verbunden ist, beispielsweise durch Verpressen, Verschweißen, Verschrauben oder Verlöten. Die Hülse 62 ermöglicht ein besonders einfaches Befestigen des Blitzfangstabs 6 am Auflageprofil 2.

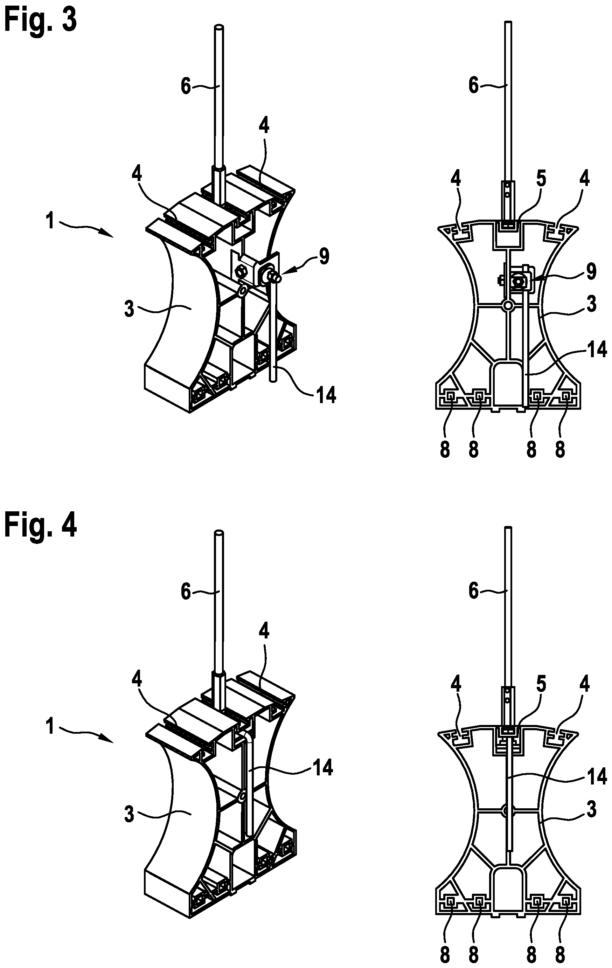

Entlang der Längsachse ist am zweiten Ende des Metallstabs 61 eine Gewindestange 64 zum Verschrauben des Blitzfangstabs 6 am Auflageprofil 2 angeordnet. Auf die Gewindestange 64 ist in Fig. 2 eine Mutter 65 aufgesetzt, so dass zwischen Mutter 65 und Hülse 62 eine Einschnürung verbleibt, um ein seitliches Einschieben des Blitzfangstabs 6 in die mittlere Nut 5 des Auflageprofils 1 aus Fig. 1 zu ermöglichen. Dies wird im Folgenden auch unter Bezugnahme auf Fig. 3 und 4 näher beschrieben.

Das Gewinde 64 ist hier als Fortsetzung des Metallstabs 61 ausgebildet. Mit anderen Worten, am zweiten Ende des Metallstabs 61 ist ein Außengewinde 64 ausgebildet, wobei das Gewinde 64 aus der Hülse 61 herausragt.

Die Hülse 62 weist auf der Seite des Gewindes eine ringförmige Endfläche auf, die wie in Fig. 3 und 4 als Auflage auf der Oberseite des Auflageprofils 1 dient. Die Endfläche ist senkrecht zur Längsachse angeordnet und umgibt das Gewinde 64. Wenn der Blitzfangstab 6 wie in Fig. 3 und 4 dargestellt mit der Auflagefläche auf der Oberseite des Auflageprofils 1 aufliegt, ragt das Gewinde 64 in die mittlere Nut 5 hinein. In der Nut 5 wird die Mutter 65 passgenau gehalten, so dass sich das Gewinde 64 einfach in die Mutter 65 einschrauben lässt, um den Blitzfangstab 6 festzuschrauben.

Somit kann der Blitzfangstab 6 einfach seitlich in die Nut 5 im Auflageprofil 1 eingeschoben und zunächst handfest damit verschraubt werden. Ferner weist die Hülse 62 wie in Fig. 2 gezeigt an ihrer Oberfläche eine Vielzahl von Abflachungen 63 auf, die als Schnittstelle für einen Schraubenschlüssel dienen. Beispielsweise kann die Hülse 62 an den Abflachungen 63 im Querschnitt senkrecht zur Längsachse eine sechseckige oder achteckige Form aufweisen. Somit kann der Blitzfangstab 6 besonders einfach mit einem herkömmlichen Maulschlüssel am Auflageprofil 1 festgeschraubt oder davon gelöst werden. Beim Festschrauben werden die als Auflagefläche dienenden Kanten der Nut 5 wie in Fig. 3 und 4 gezeigt zwischen der Endfläche und der Mutter 65 eingeklemmt.

In einer alternativen (nicht gezeigten) Ausführungsform kann das Gewinde auch an der Hülse vorgesehen sein und der Metallstabs in die Hülse eingesteckt, aber nicht durchgeführt sein.

Fig. 3 zeigt eine schematische Ansicht einer alternativen Ausführungsform eines Auflageprofils, und Fig. 4 zeigt eine schematische Ansicht einer weiteren alternativen Ausführungsform eines Auflageprofils.

Im Unterschied zum Auflageprofil 1 der Fig. 1 weisen die in Fig. 3 und 4 gezeigten Ausführungen zusätzliche elektrische Leiter 14 auf, welche den Blitzfangstab 6 mit den Befestigungsschienen 7 oder der Verdrahtung 11 verbinden können. In Fig. 3 ist zudem eine Potenzialklemme 9 dargestellt, welche als Anschluss für den Leiter 14 dient. Die Leiter 14 können die elektrische Leitfähigkeit verbessern, um beispielsweise einen hohen Kontaktwiderstand zwischen Auflageprofil 1 und Befestigungsschiene 7 zu vermeiden.

Fig. 3 und 4 zeigen zudem deutlich die taillierte Form der Auflageprofile 1, sowie die Querstreben, welche die Außenwände so verbinden, dass eine besonders feste Profilform entsteht. An der Unterseite der Auflageprofile 1 sind zudem jeweils vier Verschraubungslöcher 8 ausgebildet, um die Auflageprofile 1 mit den Befestigungsschienen 7 zu verschrauben.

Die Querschnittsansicht von Fig. 3 und 4 zeigt jeweils auch die Anordnung der äußeren Nuten 4 zum Befestigen von PV-Paneelen 2 (hier nicht dargestellt, siehe Fig. 7) sowie die mittlere Nut 5 zum Befestigen des Blitzfangstabs 6.

Fig. 5 zeigt eine Anordnung von Befestigungsschienen mit Auflageprofilen

Fig. 5 zeigt insbesondere eine parallele Anordnung von sechs Befestigungsschienen 7, wobei jeweils zwei Befestigungsschienen 7 durch ein Auflageprofil 1 miteinander verbunden sind. Die Befestigungsschienen 7 sind jeweils über seitliche Schrauben in Verschraubungslöchern 8 der Auflageprofile 1 mit den Auflageprofilen 1 verschraubt. Durch die Verschraubung kann eine sichere mechanische und elektrische Verbindung zwischen Auflageprofilen 1 und Befestigungsschienen 7 sichergestellt werden.

Durch Verschrauben der PV-Paneele 2 mit den Auflageprofilen 1 kann eine PV-Anordnung 10 aufgebaut werden, die trotz geringem Aufwand von Befestigungsschienen 7 eine hohe mechanische Stabilität aufweisen kann. Die mechanische Querverbindung senkrecht zur Längsrichtung der Befestigungsschienen 7 wird durch die PV-Paneele 2 selbst erreicht. Die elektrische Querverbindung erfolgt wie in Fig. 1 gezeigt über die Verdrahtung 11.

Sollte ein Blitz in einen der Blitzfangstäbe 6 einschlagen, so wird der elektrische Strom vom Blitzfangstab 6 über das Ablageprofil 1 in die Befestigungsschiene 7 und weiter über die Verdrahtung 12 zur Erde geleitet. Die Befestigungsschienen 7 sind daher ebenfalls aus einem Metall mit guter elektrischer Leitfähigkeit, insbesondere aus Aluminium gefertigt. Das Raster von vorzugsweise ca. 5 m, in denen jeweils die Blitzfangstäbe 6 angeordnet sind, erreicht eine gute Abdeckung zum Schutz der PV-Paneele 2 vor einem direkten Blitzeinschlag.

Fig. 6 zeigt eine Ansicht einer PV-Anordnung 10 mit einem Geländer 13 und einer Absturzsicherung 12. Die Absturzsicherung 12 ist hier als umfänglich umlaufendes Stahlseil ausgebildet, welches über Fixpunkte 15 an den Ecken mit den Befestigungsschienen 7 verbunden ist.

Die in Fig. 6 gezeigte PV-Anordnung 10 umfasst acht PV-Paneele 2 die jeweils paarweise schräg zueinander angeordnet sind, um einen Giebeldach-ähnlichen Aufbau zu bilden. In der Mitte zwischen zwei PV-Paneelen 2 sind jeweils an den Ecken der PV-Paneele 2 die Auflageprofile 1 angeordnet. In Fig. 6 weisen die Auflageprofile 1 keine Blitzfangstäbe 6 auf. Die Verschraubung der PV-Paneele 2 mit den Auflageprofilen 1 wird anhand von Fig. 7 näher erläutert.

Fig. 7 zeigt eine vergrößerte Ansicht auf ein Auflageprofil 1 der PV-Anordnung 10 aus Fig. 6. Das gezeigte Auflageprofil 1 ist mittels seitlicher Schraubenlöcher 8 mit den beiden Befestigungsschienen 7 verschraubt, um die Befestigungsschienen 7 elektrisch und mechanisch miteinander zu verbinden.

An der Oberseite des Auflageprofils 1 sind zwei PV-Paneele 2 mittels Winkelblechen W an den äußeren Nuten 4 des Auflageprofils 1 verschraubt.

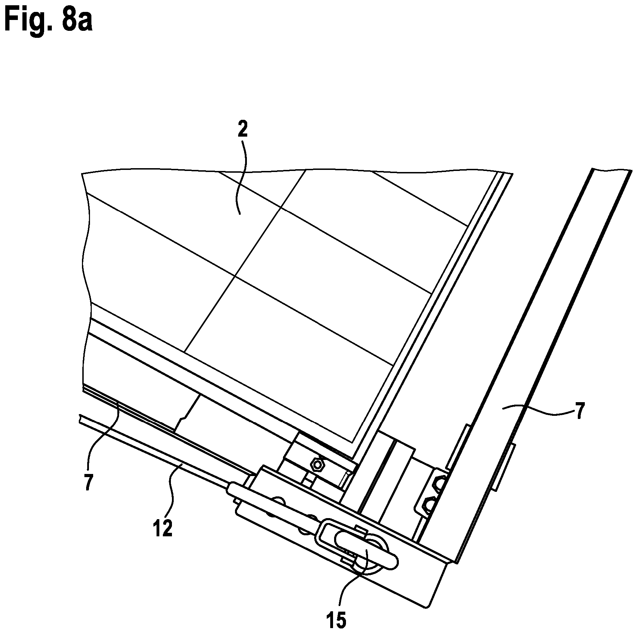

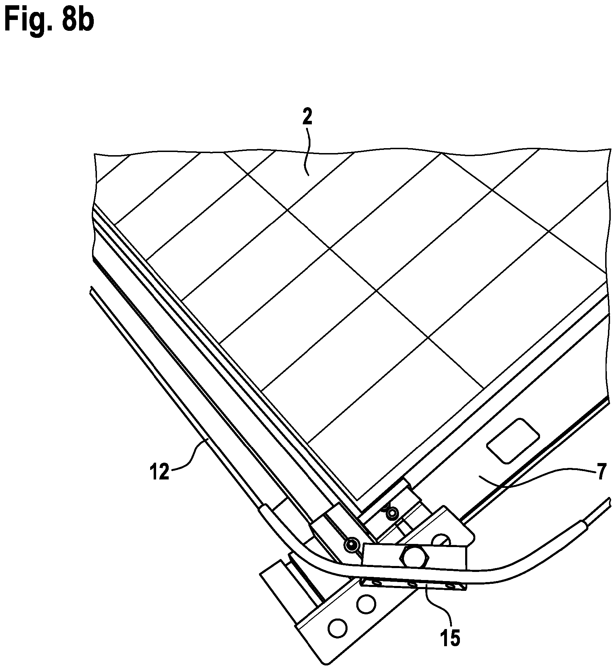

Fig. 8a) und Fig. 8b) zeigen eine vergrößerte Ansicht auf die Absturzsicherung 12 der PV-Anordnung 10 aus Fig. 6. Die Absturzsicherung 12 ist als Drahtseil ausgeführt, welches jeweils an Ecken der PV-Anordnung an Fixpunkten 15 befestigt ist, die jeweils an Befestigungsschienen 7 montiert sind. Der Fixpunkt 15 in Fig. 8a am Ende des Drahtseils ist als Öse ausgeführt. In Fig. 8b wird die Absturzsicherung 12 über die Ecke hinweg geführt. Am Fixpunkt 15 ist das Drahtseil mit einer Verstärkung versehen, die zu spitze Knickwinkel im Drahtseil verhindert, so dass die Absturzsicherung nicht beschädigt wird.

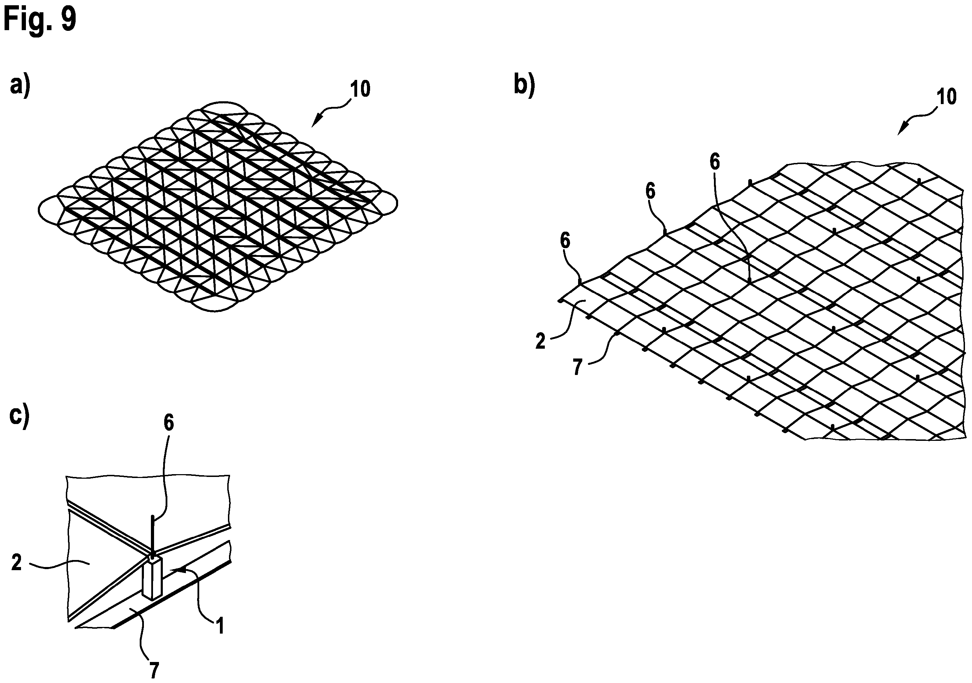

Fig. 9a) - c) illustrieren ein Raster der Blitzfangstäbe 6 in einer PV-Anordnung 10 mit einer Vielzahl von PV-Paneelen 2, die auf einer Vielzahl parallel angeordneter Befestigungsschienen 7 montiert sind. Die Befestigungsschienen 7 und die Auflageprofile 1 sind jeweils so angeordnet, dass die Blitzfangstäbe jeweils in einem Raster von 5,2 m mal 5,2 m angeordnet sind.

Fig. 9a) zeigt eine schematische Übersicht der PV-Anordnung 10. Fig. 9b) zeigt eine etwas vergrößerte Ansicht der PV-Anordnung 10 und illustriert die Abstände von 5,2 m zwischen Blitzfangstäben 6. Hieraus ergibt sich, dass zwei benachbarte parallele Befestigungsschienen 7 einen Abstand von 5,2 m/4 aufweisen.

Fig. 9c) zeigt eine vergrößerte schematische Ansicht auf einen Giebel aus zwei PV-Paneelen 2, die jeweils mit einer einander zugewandten Ecke an einem Auflageprofil 1 mit Blitzfangstab 6 befestigt sind. Der Blitzfangstab 6 ragt ca. 30 cm über die PV-Paneele 2 nach oben.

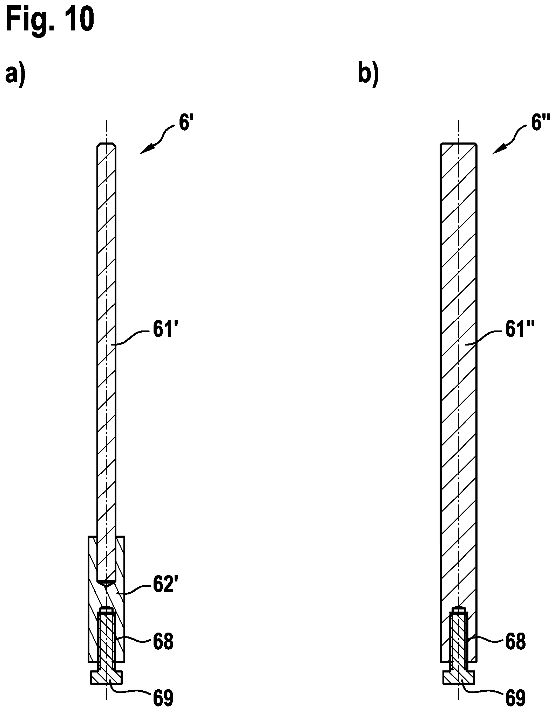

Fig. 10a), b) illustrieren alternative Ausführungsformen des Blitzfangstabes.

Gemäß Fig. 10a) umfasst der Blitzfangstab 6' einen Metallstab 61', der sich von einer Spitze an einem ersten Ende entlang einer Längsachse bis zu einem zweiten Ende erstreckt. Eine Hülse 62' ist am zweiten Ende des Metallstabs 61' angeordnet und umgibt einen Endabschnitt des Metallstabs 61' derart, dass sie fest mit dem Metallstab 61' verbunden ist.

Eine entlang der Längsachse an einem unteren Ende der Hülse 62' angeordnete Gewindebohrung 68 dient zum Aufnehmen einer Schraube 69 zum Verschrauben des Blitzfangstabs 6' mit der Schraube 69 am Auflageprofil 1, wobei die Hülse 62 eine ringförmige Endfläche aufweist, die senkrecht zur Längsachse angeordnet ist und die Gewindebohrung 68 umgibt. Insbesondere entspricht der Schraubenkopf der Schraube 69 der Schlüsselweite der mittleren Nut.

Obwohl nicht dargestellt, kann die Hülse 62' gegenüberliegende Abflachungen (vgl. Fig. 2) aufweisen, die als Ansatz für einen Schraubenschlüssel dienen.

Gemäß Fig. 10b) umfasst der Blitzfangstab 6" lediglich einen Metallstab 61", der sich von einer Spitze an einem ersten Ende entlang einer Längsachse bis zu einem zweiten Ende erstreckt.

Entlang der Längsachse an einem unteren Ende des Metallstabs 61" ist eine Gewindebohrung 68 zum Aufnehmen einer Schraube 69 zum Verschrauben des Blitzfangstabs 6" mit der Schraube 69 am Auflageprofil 1 angeordnet, wie mit Bezug auf Fig. 10a) erläutert.

Hier weist der Metallstab 61" eine ringförmige Endfläche aufweist, die senkrecht zur Längsachse angeordnet ist und die Gewindebohrung 68 umgibt.

Obwohl nicht dargestellt, kann der Metallstab 61" gegenüberliegende Abflachungen (vgl. Fig. 2) aufweisen, die als Ansatz für einen Schraubenschlüssel dienen.

### Liste der Referenzzeichen

1 Auflageprofil
2 PV-Paneel
3 Hauptkörper
4 äußere Nut
5 mittlere Nut
6, 6', 6" Blitzfangstab
61; 61'; 61" Metallstab
62; 62' Hülse
63 Abflachungen
64 Gewindestange
65 Mutter
68 Gewindebohrung
69 Schraube
7 Befestigungsschiene
8 Schraubenloch
9 Potenzialklemme
10 PV-Anordnung
11 Verdrahtung
12 Absturzsicherung
13 Geländer
14 Leiter
15 Fixpunkt
E Blitzschutzerdung
K Klemme
W Winkelblech

## Patentansprüche

1. Blitzfangstab (6), insbesondere zur Verwendung in einem Auflageprofil (1) für Photovoltaik, PV, -Paneele (2), umfassend:
einen Metallstab (61), der sich von einer Spitze an einem ersten Ende entlang einer Längsachse bis zu einem zweiten Ende erstreckt;
eine Hülse (62), die am zweiten Ende des Metallstabs (61) angeordnet ist, einen Endabschnitt des Metallstabs (61) umgibt und fest mit dem Metallstab (61) verbunden ist; und
eine entlang der Längsachse am zweiten Ende des Metallstabs (61) oder an einem unteren Ende der Hülse (62) angeordnete Gewindestange (64) zum Verschrauben des Blitzfangstabs (6) mit einer Mutter (65) am Auflageprofil (1),
wobei die Hülse (62) eine ringförmige Endfläche aufweist, die senkrecht zur Längsachse angeordnet ist und das Gewinde (64) umgibt.

2. Blitzfangstab (6'), insbesondere zur Verwendung in einem Auflageprofil (1) für Photovoltaik, PV, -Paneele (2), umfassend:
einen Metallstab (61'), der sich von einer Spitze an einem ersten Ende entlang einer Längsachse bis zu einem zweiten Ende erstreckt;
eine Hülse (62'), die am zweiten Ende des Metallstabs (61') angeordnet ist, einen Endabschnitt des Metallstabs (61') umgibt und fest mit dem Metallstab (61') verbunden ist; und
eine entlang der Längsachse an einem unteren Ende der Hülse (62') angeordnete Gewindebohrung (68) zum Aufnehmen einer Schraube (69) zum Verschrauben des Blitzfangstabs (6') mit der Schraube (69) am Auflageprofil (1),
wobei die Hülse (62) eine ringförmige Endfläche aufweist, die senkrecht zur Längsachse angeordnet ist und die Gewindebohrung (68) umgibt.

3. Blitzfangstab (6; 6') nach Anspruch 1 oder 2, wobei die Hülse (62; 62') an ihrer Oberfläche eine Vielzahl von gegenüberliegenden Abflachungen (63) als Schnittstelle für einen Schraubenschlüssel aufweist.

4. Blitzfangstab (6"), insbesondere zur Verwendung in einem Auflageprofil (1) für Photovoltaik, PV, -Paneele (2), umfassend:
einen Metallstab (61"), der sich von einer Spitze an einem ersten Ende entlang einer Längsachse bis zu einem zweiten Ende erstreckt; und
eine entlang der Längsachse an einem unteren Ende des Metallstabs (61") angeordnete Gewindebohrung (68) zum Aufnehmen einer Schraube (69) zum Verschrauben des Blitzfangstabs (6') mit der Schraube (69) am Auflageprofil (1),
wobei der Metallstab (61") eine ringförmige Endfläche aufweist, die senkrecht zur Längsachse angeordnet ist und die Gewindebohrung (68) umgibt.

5. Blitzfangstab (6") nach Anspruch 4, wobei der Metallstab (61") an seiner Oberfläche eine Vielzahl von gegenüberliegenden Abflachungen als Schnittstelle für einen Schraubenschlüssel aufweist.

6. Auflageprofil (1) zum Stützen und Befestigen von Photovoltaik, PV, -Paneelen (2), umfassend:
einen Hauptkörper (3) mit einer Unterseite zum Aufstellen auf oder in einer Befestigungsschiene (7) und einer Oberseite zum Stützen und Befestigen der PV-Paneele (2),
wobei an der Oberseite zwei äußere Nuten (4) zum Befestigen der jeweiligen PV-Paneele (2) und eine mittlere Nut (5) zum Befestigen eines Blitzfangstabs (6; 6'; 6") ausgebildet sind.

7. Auflageprofil (1) nach Anspruch 6, wobei der Hauptkörper (3) ein extrudiertes Metallprofil ist.

8. Auflageprofil (1) nach Anspruch 6 oder 7, wobei der Hauptkörper (3) im Querschnitt eine taillierte Form aufweist und die Oberseite abgerundet ist, um eine schräge Auflagefläche für die PV-Paneele (2) bereitzustellen.

9. Auflageprofil (1) nach einem der Ansprüche 6 bis 8, wobei der Hauptkörper (3) in der Nähe der Unterseite eine Vielzahl von Schraubenlöchern (8) zum Befestigen des Hauptkörpers (3) mit der Befestigungsschiene (7) aufweist.

10. Auflageprofil (1) nach einem der Ansprüche 6 bis 9, ferner umfassend eine Potenzialklemme (9) zum elektrischen und mechanischen Verbinden des Auflageprofils (1) mit einer Verdrahtung (11).

11. Auflageprofil (1) nach einem der Ansprüche 6 bis 10, ferner umfassend einen Blitzfangstab (6) nach Anspruch 1 oder 2, der in der mittleren Nut (5) am Auflageprofil (1) befestigt oder befestigbar ist.

12. Photovoltaik, PV, -Anordnung (10), umfassend:
eine Vielzahl parallel angeordneter Befestigungsschienen (7);
eine Vielzahl von Auflageprofilen (1) nach einem der Ansprüche 6 bis 11;
eine Vielzahl von PV-Paneelen (2), die jeweils an einer Seite auf mindestens zwei Auflageprofilen (1) aufliegen;
eine Vielzahl von Blitzfangstäben (6) nach einem der Ansprüche 1 bis 5, die jeweils in einem Auflageprofil (1) angeordnet sind; und
eine Verdrahtung (11) zum elektrischen Verbinden der Befestigungsschienen (7).

13. PV-Anordnung (10) nach Anspruch 9, ferner umfassend:
eine Absturzsicherung (12), die mit den Befestigungsschienen (7) verbunden ist; und/oder
ein Geländer (13), das mit den Befestigungsschienen (7) verbunden ist.
